Europäisches Patentamt

European Patent Office

Office européen des brevets

(19)

(11) Publication number: **0 317 106 B1**

# EUROPEAN PATENT SPECIFICATION

(12)

(45) Date of publication of patent specification: **17.02.93**   (51) Int. Cl.⁵: **C08J 3/03**, C08J 3/24

(21) Application number: **88310157.8**

(22) Date of filing: **28.10.88**

(54) **Method of surface-treating water-absorbent resin.**

(30) Priority: **29.10.87 JP 271798/87**

(43) Date of publication of application:
**24.05.89 Bulletin 89/21**

(45) Publication of the grant of the patent:
**17.02.93 Bulletin 93/07**

(84) Designated Contracting States:
**BE CH DE ES FR GB IT LI NL SE**

(56) References cited:
**EP-A- 0 233 014**
**FR-A- 2 559 158**
**GB-A- 2 126 591**

(73) Proprietor: **Nippon Shokubai Kagaku Kogyo
Co., Ltd
1, 5-chome, Koraibashi Higashi-ku
Osaka-shi Osaka-fu 541(JP)**

(72) Inventor: **Nagasuna, Kinya
Hanada-shataku 11-55 4-65,
Higashisakayama-cho
Sakai-shi Osaka-fu(JP)**
Inventor: **Kadonaga, Kengi
1-1-12, Fukaehonmachi Higashinada-ku
Kobe-shi Hyogo-ken(JP)**
Inventor: **Kimura, Kazumasa
15-4, Yuhigaoka Sango-cho
Ikoma-gun Nara-ken(JP)**
Inventor: **Shimomura, Tadao
2-9-11, Shinsenrinishimachi
Toyonaka-shi Osaka-fu(JP)**

(74) Representative: **Myerscough, Philip Boyd et al
J.A.Kemp & Co. 14, South Square Gray's Inn
London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of treating the surface of a water-absorbent resin. More specifically, it relates to a method of treating the surface of a water-absorbent resin for obtaining a water-absorbent resin having a high initial rate of absorption and an excellent drawing force.

Attempts have been made in the past to use water-absorbent resins as an absorber in hygienic materials for absorbing body fluids, including sanitary pads and paper diapers. Known water-absorbent resins for this utility include, for example, a hydrolyzate of a starch/acrylonitrile graft copolymer (U.S. Patent No. 3,661,815), a neutralization product of a starch/acrylic acid graft copolymer (U.S. Patent No. 4,076,663), a saponification product of a vinyl acetate/acrylate copolymer (Japanese Laid-Open Patent Publication No. 14689/1977), a hydrolyzate of an acrylonitrile copolymer or an acrylamide copolymer (Japanese Patent Publication No. 15959/1978), and crosslinked products of these polymers or a crosslinked product of partially neutralized polyacrylic acid (Japanese Laid-Open Patent Publication No. 84304/1980).

The properties required of the water-absorbent resins are a high absorbancy and a high rate of absorption on contact with an aqueous liquid, a strong drawing force for drawing liquid from a substrate containing an aqueous liquid, and a high gel strength. However, the relation among these properties does not necessarily show a positive correlation. In particular, the absorbancy is contradictory to the rate of absorption, the gel strength and the drawing force, and as the absorbancy is higher, the other properties are degraded more. A resin having a high absorbancy may form an "undissolved powder lump" when it makes contact with an aqueous liquid. In this case, liquid does not diffuse through the entire particles of the water-absorbent resin, and the rate of absorption becomes extremely low.

One known method of obtaining a water-absorbent resin is to coat the surface of a water-absorbent resin with a surface-active agent or a non-volatile hydrocarbon. This method improves the dispersibility of the water-absorbent resin in the aqueous liquid, but is not entirely effective for increasing the rate of absorption and the drawing force of the individual resin particles.

Crosslinking of the surface of the water-absorbent resin with a hydrophilic crosslinking agent is known as another method of improving the above properties with a good balance. Polyhydric alcohols, polyglycidyl ethers, haloepoxy compounds, polyvalent aldehydes, polyamines and polyvalent metal salts, etc. are used as the hydrophilic crosslinking agent. In order to form a uniform crosslinked layer on the surface and increase the improving effect, it is important to distribute the hydrophilic crosslinking agent uniformly over the surface of the water-absorbent resin in performing the crosslinking reaction.

As methods of distributing the hydrophilic crosslinking agent on the surface of the water-absorbent resin, there are known, for example, a method in which a powder of the water-absorbent resin and the hydrophilic crosslinking agent are directly mixed, and as required, the mixture is heat-treated (U.S. Patents Nos. 4,666,983 and 4,734,478), and a method in which the water-absorbent resin is reacted with the hydrophilic crosslinking agent in a mixed solvent of water and a hydrophilic organic solvent, or in the presence of water in an inert solvent (U.S. Patent No. 4,541,871 and Japanese Patent Publication No. 48521/1986).

According to the former method involving direct mixing of the water-absorbent resin powder and the crosslinking agent, the crosslinking agent is difficult to distribute uniformly on the surface of the resin powder, and the crosslinked surface layer of the resulting water-absorbent resin tends to become non-uniform.

When in the latter method, the mixture of water and a hydrophilic organic solvent is used, the hydrophilic crosslinking agent dissolves in the mixed solvent, and there is a high possibility of the crosslinking agent being distributed uniformly on the surface of the water-absorbent resin. However, when the water-absorbent resin is heated at the time of crosslinking, the mixed solvent is evaporated, and consequently it is industrially difficult to separate water and the hydrophilic organic solvent. Furthermore, it is very likely that the hydrophilic organic solvent will remain as an impurity in the water-absorbent resin. On the other hand, when a hydrophobic organic solvent such as cyclohexane and n-heptane is used as the inert solvent, the hydrophilic crosslinking agent cannot be uniformly dissolved or dispersed in it but becomes coarse liquid droplets. The liquid droplets directly make contact with the water-absorbent resin and absorbed by part of the water-absorbent resin. As a result, the distribution of the crosslinking agent on the surface of the water-absorbent resin particles becomes nonuniform, and a uniform surface crosslinkage cannot be formed.

Thus, in spite of these prior efforts, the problems described above have not been solved, and no satisfactory technique has been provided which shows a sufficient effect of improving the various properties of the water-absorbent resins with a good balance.

It is an object of this invention therefore to provide a water-absorbent resin having well-balanced excellent properties such as a high absorbancy or a high rate of absorption upon contact with an aqueous liquid and ahigh liquid drawing force by discovering a method of uniformly and efficiently crosslinking the surface of the water-absorbent resin.

In order to achieve the above object, we made extensive investigations, and have now found that the surface of a water-absorbent resin can be uniformly and efficiently crosslinked by adding a dispersion of a hydrophilic crosslinking agent obtained by dispersing the hydrophilic crosslinking agent in a hydrophobic orgnic solvent in the presence of a surface-active agent to a suspension of the water-absorbent resin a hydrophobic organic solvent.

Thus, according to this invention, there is provided a method of treating the surface of a water-absorbent resin which comprises adding a hydrophilic crosslinking agent capable of reacting with at least two functional groups of the water-absorbent resin to a suspension of the water-absorbent resin in a hydrophobic organic solvent to crosslink the surface and its vicinity of the resin, wherein the hydrophilic crosslinking agent is added in the form of a dispersion obtained by dispersing it in a hydrophobic organic solvent in the presence of a surface-active agent.

The water-absorbent resin to be surface-treated by this invention is a resin which contains functional groups such as carboxyl, sulfonic acid and amino groups, and in water, absorbs a large amount of water and swells to form a hydrogel. Examples of the water-absorbent resin include a hydrolyzate of a starch/acrylonitrile graft copolymer, a neutralization product of a starch/acrylic acid graft copolymer, a saponification product of an acrylate/vinyl acetate copolymer, a hydrolyzate of an acrylonitrile copolymer or an acrylamide copolymer, a modification product of crosslinked polyvinyl alcohol, a neutralization product of self-crosslinking polyacrylic acid, a crosslinked polyacrylate salt, and a neutralization product of a crosslinked isobutylene/maleic anhydride copolymer.

These water-absorbent resins can generally be obtained by polymerizing water-soluble ethylenically unsaturated monomers.

The water-absorbent resins used in this invention can be obtained by using monomers having functional groups as essential components. Examples of the monomers having functional groups include anionic monomers and their salts, such as acrylic acid, methacrylic acid, crotonic acid, maleic acid, maleic anhydride, fumaric acid, itaconic acid, 2-(meth)acryloylethanesulfonic acid, 2-(meth)acryloylpropanesulfonic acid, 2-(meth)acrylamide-2-methylpropanesulfonic acid, vinylsulfonic acid and styrenesulfonic acid; and cationic monomers or their quaternized products with mineral acids, such as diethylaminoethyl (meth)-acrylate, diethylaminopropyl (meth)acrylate and dimethylaminopropyl (meth)acrylamide. One or more of these monomers can be used. It is preferred to use acrylic acid, methacrylic acid, and their salts as essential main components. As required, other monomers may be used in combination with the above monomers containing functional groups. The other monomers that can be used are, for example, monomers containing nonionic hydrophilic groups, such as (meth)acrylamide, N-substituted (meth)acrylamide, 2-hydroxyethyl (meth)acrylate and 2-hydroxypropyl (meth)acrylate.

Water-absorbent resins obtained by copolymerizing a very small amount of a crosslinking agent having polymerizable unsaturated groups or reactive functional groups are preferred to self-crosslinking water-absorbent resins without a crosslinking agent.

Examples of the crosslinking agent include N,N$'$-methylenebis(meth)acrylamide, N-methylol (meth)-acrylamide, (poly)ethylene glycol di(meth)acrylate, (poly)propylene glycol di(meth)acrylate, glycerol tri-(meth)acrylate, glycerol di(meth)acrylate, polyvalent metal salts of (meth)acrylic acid, trimethylolpropane tri-(meth)acrylate, triallylamine, triallyl cyanurate, triallyl isocyanurate, triallyl phosphate, glycidyl (meth)-acrylate, ethylene glycol diglycidyl ether, glycerol tri(di)glycidyl ether, and polyethylene glycol diglycidyl ether. Two or more of these crosslinking agents may be used in combination. The amount of the crosslinking agent used is generally about 0.001 mole % to 1.0 mole % based on the water-soluble ethylenically unsaturated monomers.

The water-absorbent resins may be obtained by using various polymerization methods such as aqueous polymerization, inverse-phase suspension polymerization, precipitation polymerization and bulk polymerization. The aqueous solution polymerization or the inverse-phase suspension polymerization method are preferred from the standpoint of operability during polymerization and handlability during the surface-treatment of the water-absorbent resins. The inverse-phase suspension poly-merization method is especially preferred in view of the dispersibility of the water-absorbent resin in a hydrophobic organic solvent.

The concentration of the monomers in the aqueous solution of the monomers in the production of water-absorbent resins by aqueous solution polymerization or inverse-phase suspension polymerization may be varied over a wide range. Generally, it is at least 25 % by weight, preferably at least 35 % by weight, to a saturation concentration.

A conventional water-soluble radical polymerization initiator may be used in the polymerization. Examples include persulfates such as potassium persulfate, sodium persulfate and ammonium persulfate; hydroperoxides such as t-butyl hydroperoxide and cumene hydroperoxide; and azo compounds such as 2,2'-azobis-2-amidinopropane hydrochloride. Two or more of these polymerization initiators may be used in combination. Furthermore, redox systems composed of a combination of these polymerization initiators and reducing agents such as sulfites, L-ascorbic acid and ferric salts may also be used.

By the inverse-phase suspension polymerization method, the water-absorbent resin may be obtained by dispersing (suspending) an aqueous solution of a water-soluble ethylenically unsaturated monomer in an inert hydrophobic organic solvent such as n-hexane, n-heptane, n-octane or cyclohexane using a dispersing agent such as a sorbitan fatty acid ester, a glycerol or polyglycerol fatty acid ester, a sucrose fatty acid ester, cellulose ether or cellulose ester, and then polymerizing the monomer in the presence of a crosslinking agent.

The method of this invention comprises adding a dispersion of the hydrophilic crosslinking agent obtained by dispersing it in a hydrophobic organic solvent in the presence of a surface-active agent to a suspension of the water-absorbent resin obtained by dispersing it in a hydrophobic orgnic solvent, and then reacting the mixture to crosslink the surface and its vicinity of the water-absorbent resin.

The hydrophobic organic solvent used to suspend the water-absorbent resin may be any solvent which is inert to polymerization and other reactions. Examples include aliphatic hydrocarbons such as n-pentane, n-hexane, n-heptane and n-octane; alicyclic hydrocarbons such as cyclohexane, methylcyclohexane, cyclooctane and decalin; aromatic hydrocarbons such as benzene, toluene and xylene; and halogenated hydrocarbons such as chlorobenzene, bromobenzene, carbon tetrachloride and 1,2-dichloroethane. Especially preferred are n-hexane, cyclohexane, chlorobenzene, toluene and xylene. If required, two or more of these solvents can be used in combination.

The amount of the hydrophobic organic solvent used is 0.4 to 20 parts by weight, preferably 0.7 to 10 parts by weight, per part by weight of the water-absorbent resin.

The hydrophilic crosslinking agent used in this invention may be any hydrophilic, preferably water-soluble, compound capable of reacting two or more functional groups of the water-absorbent resin. Examples include polyhydric alcohols such as ethylene glycol, diethylene glycol, triethylene glycol, tetraethylene glycol, polyethylene glycol, glycerol, polyglycerol, propylene glycol, diethanolamine, triethanolamine, polyoxypropylene, oxyethylene oxypropylene block copolymer, pentaerythritol and sorbitol; polyglycidyl compounds such as ethylene glycol diglycidyl ether, polyethylene glycol diglycidyl ether, glycerol polyglycidyl ether, diglycerol polyglycidyl ether, polyglycerol polyglycidyl ether, sorbitol polyglycidyl ether, pentaerythritol polyglycidyl ether, propylene glycol diglycidyl ether and polypropylene glycol diglycidyl ether; polyvalent aziridines such as 2,2-bishydroxymethyl butanol-tris[3-(1-aziridinyl)propionate], 1,6-hexamethylenediethyleneurea and diphenylmethane-bis-4,4'-N,N'-diethyleneurea; haloepoxy compounds such as epichlorohydrin and alpha-methylchlorohydrin; polyvalent aldehydes such as glutaraldehyde and glyoxal; polyamines such as ethylenediamine, diethylenetriamine, triethylenetetramine, tetraethylenepentamine, pentaethylenehexamine and polyethyleneimine; polyisocyanates such as 2,4-toluylene diisocyanate and hexamethylene diisocyanate; polyvalent metal salts such as aluminum chloride, magnesium chloride, calcium chloride, aluminum sulfate, magnesium sulfate and calcium sulfate; and alkyl di(tri)halogenides such as 1,4-dibromobutane, 1,6-dibromohexane and 1,3,5-trichloropentane. The polyhydric alcohol, polyglycidyl compounds, polyamines and polyvalent metal salts are especially preferred.

The suitable amount of the hydrophilic crosslinking agent used, which varies depending partly upon its type, is generally 0.005 to 5 % by weight based on the water-absorbent resin. If it is less than 0.005 % by weight, no surface-treating effect can be obtained. If it is larger than 5 % by weight, the absorbancy of the resin may be reduced.

In the method of this invention, the addition of the hydrophilic crosslinking agent in the form of a dispersion obtained by finely dispersing it in the hydrophobic organic solvent in the presence of a surface-active agent is especially important for forming a uniform crosslinked layer on the surface of the water-absorbent resin and improving the various properties of the water-absorbent resin. In dispersing the hydrophilic crosslinking agent in the hydrophobic organic solvent, the hydrophilic crosslinking agent can be used as such or in the form of a solution in water or a hydrophilic organic solvent. Preferably, it is used as an aqueous solution for uniform dispersion.

The hydrophobic organic solvent used in obtaining the dispersion of the hydrophilic crosslinking agent may be the same as those used for suspending the water-absorbent resin. The amount of the hydrophobic organic solvent is 1 to 100 parts by weight, preferably 5 to 50 parts by weight, per part by weight of the hydrophilic crosslinking agent or its solution.

4

The surface-active agent used in obtaining the dispersion of the hydrophilic crosslinking agent may be at least one member selected from nonionic surface-active agents, anionic surface-active agents, cationic surface-active agents, amphoteric surface-active agents, and polymeric surface-active agents. Examples of the non-ionic surface active agents are sorbitan fatty acid esters, polyoxyethylene sorbitan fatty acid esters, glycerol or polyglycerol fatty acid esters, polyoxyethylene alkyl ethers, polyoxyethylene alkylphenol ethers, polyoxyethylene acyl esters and sucrose fatty acid esters. Examples of the anionic surface-active agents include higher alcohol sulfates, alkylnaphthalenesulfonates, alkylpolyoxyethylenesulfates and dialkylsulfosuccinates. Examples of the cationic surface-active agents are alkyl quaternary ammonium salts and alkylamine salts. Examples of the amphoteric surface-active agents are alkylbetains and lecithin. Examples of the polymeric surface-active agents are oleophilic polymers having carboxyl groups. Of these, nonionic surface-active agents having an HLB of at least 3 or anionic surface-active agents are preferred.

The suitable amount of the surface-active agent used is 0.001 to 0.5 part by weight per part by weight of the hydrophobic organic solvent. If it is less than 0.0001 part by weight, it is difficult to achieve a uniform crosslinking treatment of the surface of the water-absorbent resin with the hydrophilic crosslinking agent, and the final water-absorbent resin obtained tends to shown an insufficient improving effect in properties. If it is larger than 0.5 part by weight, no corresponding increase in properties can be obtained.

If desired, part of the surface-active agent may be incorporated in the hydrophobic organic solvent used to suspend the water-absorbent resin.

The dispersion of the hydrophilic crosslinking agent may be prepared by any method by which the hydrophilic crosslinking agent can be stably dispersed in the hydrophobic organic solvent by the surface-active agent, for example by adding the hydrophilic crosslinking agent to the optionally heated hydrophobic organic solvent containing the surface-active agent with intense stirring or shaking, or by adding the surface-active agent to a mixture of the hydrophilic crosslinking agent and the hydrophobic organic solvent with intense stirring or shaking.

In the present invention, the dispersion of the hydrophilic crosslinking agent denotes an emulsion or suspension in which the hydrophilic crosslinking agent, or its solution in water or a water-soluble organic solvent is dispersed as fine liquid droplets in the hydrophobic organic solvent. The average liquid droplet size of the dispersion of the hydrophilic crosslinking agent may vary widely depending upon the particle diameter of the water-absorbent resin, and may usually be within the range of 0.01 to 100 micrometers. To achieve a uniform surface-treatment, the average liquid droplet size is preferably small, for example 0.01 to 50 micrometers. A dispersion having an average liquid droplet size of less than 0.01 micrometer is difficult to obtain with an ordinary stirrer, and a special stirrer is required.

In the method of this invention, the addition of the dispersion of the hydrophilic crosslinking agent to the suspension of the water-absorbent resin may be effected by any method, for example by adding the dispersion of the hydrophilic crosslinking agent to the suspension of the water-absorbent resin with stirring.

To crosslink the surface and its vicinity of the water-absorbent resin with the hydrophilic crosslinking agent, the water-absorbent resin is maintained at the reaction temperature determined according to the type of the hydrophilic crosslinking agent obtained. For example, it can be accomplished by maintaining the suspension of the water-absorbent resin mixed with the dispersion of the hydrophilic crosslinking agent at a temperature of usually 10 to 250 °C, preferably 50 to 180 °C to effect crosslinking reaction, or by separating the water-absorbent resin from the suspension of the water-absorbent resin mixed with the dispersion of the hydrophilic crosslinking agent by filtration or the like and then heat-treating the separated resin in an ordinary dryer or a heating oven.

If the water-absorbent resin is obtained by aqueous solution polymerization or inverse-phase suspension polymerization, it is difficult to remove water used at the time of polymerization completely. However, according to the method of this invention, water-absorbent resins having a water content of 5 to 25 % by weight can be used as the starting material.

According to the method of this invention by which the surface and its vicinity of the water-absorbent resin is crosslinked by adding the dispersion of the hydrophilic crosslinking agent, which is obtained by dispersing it in the hydrophobic organic solvent in the presence of the surface-active agent, to the suspension of the water-absorbent resin in the hydrophobic organic solvent, a uniform crosslinked layer can be formed on the surface of the water-absorbent resin, and the properties of the surface of the water-absorbent resin can be improved so as to adapt them favorably to a water-absorbing material.

Accordingly, the water-absorbent resin surface-treated by the method of this invention has a high absorbancy and a high rate of absorption upon contact with an aqueous liquid, and an excellent force of drawing liquid from a substrate containing an aqueous liquid.

Furthermore, the method of this invention is industrially advantageous in that since it does not use a hydrophilic organic solvent, the hydrophobic organic solvent used in this invention can be easily separated from water contained in the water-absorbent resin or water freshly added.

The following examples illustrate the present invention in detail.

The properties of the water-absorbent resins in the following examples were measured by the following methods.

(1) Absorbancy

The water-absorbent resin (0.2 g) was uniformly filled in a teabag-type bag (40 mm x 150 mm) made of a nonwoven cloth, and the bag was immersed in a 0.9 % by weight aqueous solution of sodium chloride, and pulled up 3 minutes later and 30 minutes later, respectively. The bag was drained for a predetermined period of time, and its weight was measured. The absorbancy (g/g) was calculated by dividing (the weight of the bag after water absorption - blank) by the weight of the water-absorbent resin. The weight of the bag alone after absorption was used as the blank.

(2) Rate of absorption

The water-absorbent resin (1.0 g) was added to 20 ml of a synthetic urine (containing 1.9 % by weight of urea, 0.8 % by weight of sodium chloride, 0.1 % by weight of calcium chloride and 0.1 % by weight of magnesium sulfate). The time which elapsed until the swollen gel of the resin lost flowability as a result of absorbing all the synthetic urine was defined as the rate of absorption.

(3) Drawing force

Twenty milliliters of the above synthetic urine was dropped onto a pieceof tissue paper (55 mm x 75 mm) to make a substrate containing synthetic urine, and 1.0 g of the water-absorbent resin (1.0 g) was placed on the substrate. Ten minutes later, the swollen gel of the resin was taken and its weight was measured and defined as the force to draw the liquid from the tissue paper. Simultaneously, the presence of an undissolved powder lump of the added water-absorbent resin was examined.

EXAMPLE 1

Cyclohexane (250 ml) was aded to a 500 ml four-necked separable flask equipped with a stirrer, a reflux condenser, a thermometer, a nitrogen gas introducing tube and a dropping funnel, and 2.0 g of sorbitan monostearate (HLB = 4.7) was added as a dispersant and dissolved. The dissolved oxygen was driven off by blowing nitrogen gas into the flask.

Separately, 28.2 g of sodium acrylate, 7.21 g of acrylic acid and 0.004 g of methylenebis-acrylamide were dissolved in 65.79 g of deionized water in a flask, and then 0.05 g of potassium persulfate was added and dissolved in the solution. Nitrogen gas was blown into the flask to drive off oxygen dissolved in the aqueous solution.

The resulting aqueous monomer solution in this flask was added to the separable flask and dispersed by stirring at 250 rpm. Then, the bath temperature was raised to 60 °C, and the polymerization reaction was initiated. The reaction mixture was maintained at this temperature for 2 hours to complete the polymerization. After the polymerization, most of water was evaporated by azeotropic dehydration to give a suspension of the polymer in cyclohexane. The resulting polymer had a water content of 8 %.

Separately, 0.5 g of sorbitan monolaurate (Rheodol SP-L10, a product of Kao Co., Ltd.; HLB = 8.6) as a surface-active agent was dissolved in 50 g of cyclohexane in a flask. An aqueous solution of 0.18 g of glycerol in 2 ml of water was added to the solution with strong shaking and stirring to give a cyclohexane dispersion of glycerol. The dispersion had an average liquid droplet diameter of 10 micrometers.

At room temperature, the dispersion was added to the polymer suspension and mixed with stirring. The mixture was then filtered. The resulting solid was put in a heating furnace at 180 °C and heat-treated for 30 minutes to give a surface-treated water-absorbent resin (1).

The properties of the resulting water-absorbent resin (1) were examined, and the results are shown in Table 2.

EXAMPLES 2-4

Surface-treated water-absorbent resins (2) to (4) were prepared by reacting Example 1 except that the surface-active agents indicated in Table 1 were used instead of sorbitan monolaurate used to prepare the dispersion of the hydrophilic crosslinking agent in Example 1. The properties of these water-absorbent resins (2) to (4) were examined, and the results are shown in Table 2.

### Table 1

| Example | Surface-treated water-absorbent resin | Surface-active agent used | | Average liquid dropelt diameter (micrometers) of the dispersion of the cross-linking agent |
|---------|-------------|-------------|-------------|-------------|
| | | Type (*) | Amount (g) | |
| 2 | (2) | Sorbitan mono-stearate | 0.3 | 15 |
| 3 | (3) | Polyoxyethylene sorbitan mono-stearate | 0.4 | 3 |
| 4 | (4) | Sodioum dialkyl-sulfosuccinate | 0.5 | 0.9 |

(*)  These surface-active agents are commercially available from Kao Co., Ltd. under the following tradenames.

Sorbitan monostearate (Rheodol SP-S10, HLB=4.7).

Polyoxyethylene sorbitan monostearate (Rheodol TW-S120, HLB=14.9).

Sodium dialkylsulfosuccinate (Pelex OT-P).

EXAMPLE 5

The same polymerization as in Example 1 was carried out except that 1.5 g of ethyl cellulose was used instead of 2.0 g of sorbitan monostearate as the dispersing agent during polymerization. After the polymerization, most of water was evaporated by azeotropic dehydration to give a cyclohexane suspension of the polymer. The resulting polymer had a water content of 17 %.

Separately, a solution of 0.04 g of ethylene glycol diglycidyl ether in 2 ml of water and 20 g of cyclohexane were introduced into a flask. A solution of 0.5 g of polyoxyethylene cetyl ether (Emulgen 220, a product of Kao Co., Ltd.; HLB = 14.2) in 10 g of cyclohexane was added with strong stirring to give a dispersion of ethylene glycol diglycidyl ether. The dispersion had an average liquid droplet diameter of 5 micrometers.

The dispersion was added with stirring to the polymer suspension at room temperature. The mixture was heated to 75 °C, and maintained at this temperature for 3 hours.

Cyclohexane was then removed by filtration, and the resulting solid was dried under reduced pressure at 80 °C to obtain a surface-treated water-absorbent resin (5).

7

The properties of the water-absorbent resin (5) were examined, and the results are shown in Table 2.

EXAMPLE 6

Example 5 was repeated except that a solution of 0.7 g of aluminum chloride in 5 ml of water was used instead of the aqueous solution of ethylene glycol diglycidyl ether as the hydrophilic crosslinking agent. The dispersion had an average liquid droplet diameter of 2 micrometers.

The properties of the resulting water-absorbent resin (6) were examined, and the results are shown in Table 2.

EXAMPLE 7

30.2 g of 2-sulfoethyl methacrylate sodium salt, 4.2 g of sodium acrylate, 1.1 g of acrylic acid and 0.005 of N,N′-methyelenbis-acrylamide were dissolved in 65.9 g of deionized water, and nitrogen gas was blown into the solution to drive off dissolved oxygen. While this aqueous monomer solution was maintained at 30 °C, 0.05 g of potassium persulfate and 0.003 g of sodium hydrogen sulfite were added. The mixture was left to stand to polymerize the monomers and obtain a gel-like hydrous polymer. The hydrous polymer was dried in a hot air dryer, crushed by a hammer-type crusher, and sieved by a 28-mesh wire gauze to give a polymer having a size below 28 mesh. The polymer had a water content of 9 %.

35 g of the polymer was added to 200 ml of toluene and the mixture was stirred to give a suspension of the polymer.

Separately, in a flask, 0.5 g of sucrose fatty acid ester (DK Ester F-140 made by Daiichi Industrial Chemicals Co., Ltd.; HLB = 13.0) was dissolved in 40 g of toluene, and a solution of 0.03 g of tetraglycerol tetraglycidyl ether in 4 ml of water was added to the solution with strong stirring to give a dispersion of tetraglycerol tetraglycidyl ether. The dispersion had an average liquid droplet diameter of 3 micrometers.

The resulting dispersion was added to the polymer suspension and mixed at room temperature with stirring. The mixture was then heated to 75 °C, and maintained at this temperature for 3 hours. Then, toluene was removed by filtration. The resulting solid was dried under reduced pressure at 80 °C to give a surface-treated water-absorbent resin (7).

The properties of the water-absorbent resin (7) were examined, and the results are shown in Table 2.

COMPARATIVE EXAMPLE 1

A solution of 0.18 g of glycerin in 2 ml of water was added at room temperature with stirring to the cyclohexane suspension of the polymer obtained by azeotropic dehydration in Example 1. The mixture was filtered. The resulting solid was heat-treated as in Example 1 to give a comparative water-absorbent resin (1′).

The properties of the comparative absorbent resin (1′) are shown in Table 2.

COMPARATIVE EXAMPLE 2

A solution of 0.04 g of ethylene glycol diglycidyl ether in 2 ml of water was added to the cyclohexane suspension of the polymer obtained in Example 5, and the mixture was stirred at room temperature. The mixture was heated to 75 °C and maintained at this temperature for 3 hours. The reaction mixture was filtered and dried as in Example 5 to give a comparative water-absorbent resin (2′).

The properties of the comparative water-absorbent resin (2′) were examined, and the results are shown in Table 2.

COMPARATIVE EXAMPLE 3

A solution of 0.03 g of tetraglycerol tetraglycidyl ether in 4 ml of water was added to the toluene suspension of the polymer below 28 mesh obtained in Example 7, and mixed with stirring at room temperature. The mixture was heated to 75 °C, and maintained at this temperature for 3 hours. Then, as in Example 7, the mixture was filtered and dried to give a comparative water-absorbent resin (3′).

The properties of the comparative water-absorbent resin (3′) were examined, and the results are shown in Table 2.

Table 2

**Properties of the water-absorbent resin**

| | Water-absorbent resin | Absorbancy (g/g) 3 minutes later | Absorbancy (g/g) 30 minutes later | Rate absorption (sec) | Drawing force (g) | Formation of an un-dissolved powder lump |
|---|---|---|---|---|---|---|
| Example 1 | (1) | 43 | 57 | 40 | 16.4 | No |
| Example 2 | (2) | 46 | 56 | 36 | 17.0 | " |
| Example 3 | (3) | 45 | 58 | 34 | 16.7 | " |
| Example 4 | (4) | 43 | 52 | 29 | 17.2 | " |
| Example 5 | (5) | 41 | 58 | 29 | 17.6 | " |
| Example 6 | (6) | 48 | 57 | 41 | 15.8 | " |
| Example 7 | (7) | 38 | 51 | 35 | 16.3 | " |
| Comparative Example 1 | (1') | 35 | 56 | 85 | 12.5 | Yes |
| Comparative Example 2 | (2') | 31 | 52 | 60 | 13.0 | " |
| Comparative Example 3 | (3') | 29 | 49 | 50 | 12.0 | " |

**Claims**

1. A method of treating the surface of a water-absorbent resin, which comprises adding a hydrophilic crosslinking agent capable of reacting with at least two functional groups of the water-absorbent resin to

9

a suspension of the water-absorbent resin in a hydrophobic organic solvent to crosslink the resin at or near its surface, the hydrophilic crosslinking agent being added in the form of a dispersion obtained by dispersing it in a hydrophobic organic solvent in the presence of a surface-active agent.

2. A method according to claim 1 in which the surface-active agent comprises at least one nonionic, anionic, cationic or amphoteric surface-active agent.

3. A method according to claim 1 or 2 in which the dispersion of the hydrophilic crosslinking agent has an average liquid droplet size of 0.01 to 100 micrometers, preferably 0.01 to 50 micrometers.

4. A method according to any one of the preceding claims in which the hydrophilic crosslinking agent comprises at least one compound which is a polyhydric alcohol, polyglycidyl compound, polyamine, haloepoxy compound, polyvalent aldehyde or polyvalent metal compound.

5. A method according to any one of the preceding claims in which the hydrophilic crosslinking agent is used in an amount of 0.005 to 5% by weight based on the water-absorbent resin.

6. A method according to any one of the preceding claims wherein the hydrophobic organic solvent comprises at least one aliphatic, alicyclic, aromatic or halogenated hydrocarbon.

7. A method according to any one of the preceding claims in which the hydrophobic organic solvent used to suspend the water absorbent resin is used in an amount of 0.4 to 20, preferably 0.7 to 10, parts by weight based on the water-soluble resin.

8. A method according to any one of the preceding claims wherein the hydrophobic organic solvent used to obtain the dispersion of crosslinking agent is used in an amount of 1 to 100, preferably 5 to 50, parts by weight based on the hydrophilic crosslinking agent or its solution.

9. A method according to any one of the preceding claims wherein at least one of the at least two functional groups of the water-absorbent resin is a carboxy, sulphonic acid or amino group.

10. A method according to any one of the preceding claims in which the water-absorbent resin has been obtained by subjecting an aqueous solution of a water-soluble ethylenically unsaturated monomer to inverse phase suspension polymerization in the presence of a crosslinking agent and a dispersing agent in a hydrophobic organic solvent inert to the polymerization.

**Patentansprüche**

1. Verfahren zur Behandlung der Oberfläche eines wasserabsorbierenden Harzes, umfassend die Zugabe eines hydrophilen Vernetzungsmittels, das die Fähigkeit besitzt, mit mindestens zwei funktionellen Gruppen des wasserabsorbierenden Harzes eine Reaktion einzugehen, zu einer Suspension des wasserabsorbierenden Harzes in einem hydrophoben organischen Lösungsmittel, um das Harz an oder nahe an seiner Oberfläche zu vernetzen, wobei das hydrophile Vernetzungsmittel in Form einer Dispersion zugegeben wird, die erhalten wird, indem man es in einem hydrophoben organischen Lösungsmittel in Gegenwart eines oberflächenaktiven Stoffes dispergiert.

2. Verfahren nach Anspruch 1, bei welchem der oberflächenaktive Stoff mindestens einen nichtionischen, anionischen, kationischen oder amphoteren oberflächenaktiven Stoff enthält.

3. Verfahren nach Anspruch 1 oder 2, bei welchem die Dispersion des hydrophilen Vernetzungsmittels eine durchschnittliche Tröpfchengröße der Flüssigkeit von 0,01 bis 100 $\mu$m, vorzugsweise 0,01 bis 50 $\mu$m, aufweist.

4. Verfahren nach einem der vorhergehenden Ansprüche, bei welchem das hydrophile Vernetzungsmittel mindestens eine Verbindung aufweist, die ein mehrwertiger Alkohol, eine Polyglycidylverbindung, ein Polyamin, eine Haloepoxidverbindung, ein mehrwertiges Aldehyd oder eine mehrwertige metallische Verbindung ist.

**5.** Verfahren nach einem der vorhergehenden Ansprüche, bei welchem das hydrophile Vernetzungsmittel in einer Menge von 0,005 bis 5 Gew.%, bezogen auf das wasserabsorbierende Harz, verwendet wird.

**6.** Verfahren nach einem der vorhergehenden Ansprüche, wobei das hydrophobe organische Lösungsmittel mindestens einen aliphatischen, alicyclischen, aromatischen oder halogenierten Kohlenwasserstoff enthält.

**7.** Verfahren nach einem der vorhergehenden Ansprüche, bei welchem das hydrophobe organische Lösungsmittel, das verwendet wird, um das wasserabsorbierende Harz zu suspendieren, in einer Menge von 0,4 bis 20, vorzugsweise 0,7 bis 10, Gew. -Teile bezogen auf das wasserlösliche Harz, verwendet wird.

**8.** Verfahren nach einem der vorhergehenden Ansprüche, wobei das hydrophobe organische Lösungsmittel, das verwendet wird, um die Dispersion des Vernetzungsmittels zu erhalten, in einer Menge von 1 bis 100, vorzugsweise 5 bis 50, Gew.-Teile, bezogen auf das hydrophile Vernetzungsmittel oder dessen Lösung, verwendet wird.

**9.** Verfahren nach einem der vorhergehenden Ansprüche, wobei mindestens eine der mindestens zwei funktionellen Gruppen des wasserabsorbierenden Harzes eine Carboxyl-, Sulfonsäure-oder Aminogruppe ist.

**10.** Verfahren nach einem der vorhergehenden Ansprüche, bei welchem das wasserabsorbierende Harz erhalten wurde, indem man eine wäßrige Lösung eines wasserlöslichen, ethylenisch ungesättigten Monomers in Gegenwart eines Vernetzungsmittels und eines Dispergiermittels in einem hydrophoben organischen Lösungsmittel, das hinsichtlich der Polymerisation inert ist, einer Phasenunmkhehr-Suspensionspolymerisation unterwarf.

## Revendications

**1.** Procédé de traitement de la surface d'une résine absorbant l'eau, qui comprend l'addition d'un agent de réticulation hydrophile, capable de réagir avec au moins deux groupes fonctionnels de la résine absorbant l'eau, à une suspension de la résine absorbant l'eau dans un solvant organique hydrophobe, pour réticuler la résine sur sa surface ou près d'elle, l'agent de réticulation hydrophile étant ajouté sous la forme d'une dispersion obtenue par dispersion dudit agent dans un solvant organique hydrophobe, en présence d'un agent tensio-actif.

**2.** Procédé selon la revendication 1, dans lequel l'agent tensio-actif comprend au moins un agent tensio-actif non-ionique, anionique, cationique ou amphotère.

**3.** Procédé selon la revendication 1 ou 2, dans lequel la dispersion de l'agent de réticulation hydrophile a une taille moyenne de gouttelette liquide de 0,01 à 100 $\mu$m, de préférence de 0,01 à 50 $\mu$m.

**4.** Procédé selon l'une quelconque des revendications précédentes, dans lequel l'agent de réticulation hydrophile comprend au moins un composé qui est un alcool polyhydroxylé, un composé polyglycidylique, une polyamine, un composé halogénoépoxy, un aldéhyde polyfonctionnel ou un dérivé de métal polyvalent.

**5.** Procédé selon l'une quelconque des revendications précédentes, dans lequel on utilise l'agent de réticulation hydrophile en une proportion de 0,005 à 5 % en poids par rapport à la résine absorbant l'eau.

**6.** Procédé selon l'une quelconque des revendications précédentes, dans lequel le solvant organique hydrophobe comprend au moins un hydrocarbure aliphatique, alicyclique, aromatique ou halogéné.

**7.** Procédé selon l'une quelconque des revendications précédentes, dans lequel le solvant organique hydrophobe, utilisé pour mettre en suspension la résine absorbant l'eau, est utilisé en une proportion de 0,4 à 20 parties en poids, de préférence de 0,7 à 10 parties en poids, par partie en poids de la résine absorbant l'eau.

**8.** Procédé selon l'une quelconque des revendications précédentes, dans lequel le solvant organique hydrophobe, utilisé pour obtenir la dispersion de l'agent de réticulation, est utilisé en une proportion de 1 à 100 parties en poids, de préférence de 5 à 50 parties en poids, par partie en poids de l'agent de réticulation hydrophile ou de sa solution.

**9.** Procédé selon l'une quelconque des revendications précédentes, dans lequel au moins l'un des au moins deux groupes fonctionnels de la résine absorbant l'eau est un groupe carboxy, acide sulfonique ou amino.

**10.** Procédé selon l'une quelconque des revendications précédentes, dans lequel on a obtenu la résine absorbant l'eau en soumettant une solution aqueuse d'un monomère éthyléniquement insaturé, soluble dans l'eau, à une polymérisation en suspension à inversion de phase, en présence d'un agent de réticulation et d'un agent dispersant, dans un solvant organique hydrophobe, inerte lors de la polymérisation.